# EUROPÄISCHE PATENTSCHRIFT

(11) **EP 0 414 869 B1**
(45) Veröffentlichungstag und Bekanntmachung des Hinweises auf die Patenterteilung: **28.12.1994**
(21) Anmeldenummer: 90904266.5
(22) Anmeldetag: 14.03.1990
(51) Int. Cl.: B23K 26/04

(54) **VERFAHREN ZUR QUALITÄTSSICHERUNG BEIM LASERSTRAHLSCHWEISSEN UND -SCHNEIDEN**
PROCESS FOR QUALITY CONTROL OF LASER BEAM WELDING AND CUTTING
PROCEDE DE CONTROLE DE LA QUALITE EN SOUDAGE ET DECOUPAGE AU LASER

(30) Priorität: 14.03.1989 DE 3908187
(43) Veröffentlichungstag der Anmeldung: 06.03.1991
(73) Patentinhaber: Jurca, Marius-Christian, Dipl.Ing., D-63110 Rodgau (DE)
(72) Erfinder: Jurca, Marius-Christian, Dipl.Ing., D-63110 Rodgau (DE)
(74) Vertreter: Gudel, Diether
(86) Internationale Anmeldenummer: EP9000412
(87) Internationale Veröffentlichungsnummer: WO9010520

(56) Entgegenhaltungen:
- EP-A- 0 299 702
- DE-U- 8 710 866
- LASER UND OPTOELEKTRONIK., vol. 20, no. 5, Oktober 1988, STUTTGART, DE, Seiten 64-69, W. Gatzweiler et al.: "Messung von Plasmadichtefluktuation und Schallemission beim Laserstrahlschweissen zur Prozessüberwachung"
- DVS-Bericht vol. 113, 1988 DUSSELDORF (DE) Seiten 58-59 ; R. Beck et al,: "UV-Plasma-Sensor zur Uberwachung von Laserstrahlscheissungen".
- PATENT ABSTRACTS OF JAPAN, vol 11, no. 166 (M-593)(2613) 28 mai 1987, & JP-A-61 296980 (TOSHIBA CORP) 27 Dezember 1986

## Beschreibung

Die Erfindung betrifft ein Verfahren zur Qualitätssicherung beim Laserstrahlschweißen oder Laserstrahlschneiden, wobei das bei der Materialbearbeitung aus einer Plasmawolke entsendete Ultraviolettlicht in einem Wellenlängenbereich von ca. 200 nm bis ca. 450 nm zwecks einer Überprüfung der Laserstrahleinkopplung sowie zur Einhaltung anderer Prozeßparameter, wie Laserausgangsleistung, Strahldefokussierung, Strahlqualität, Schutzgas- und Arbeitsgaszuführung sowie Werkstückzusammensetzung, Reinigungsgrad der Werkstückoberfläche und Schweißspaltbreite mit einem UV-empfindlichen Detektor erfaßt wird.

Ein derartiges Verfahren ist z.B. durch den DVS-Bericht Hr. 113 über die Tagung "ECLAT '88", S. 58-59, oder durch die Zeitschrift "Laser und Optoelektronik" 20 (53/1988, Seiten 65-69 bekannt.

Bekannte derartige Verfahren verwenden einen lichtempfindlichen Detektor, der aus einer Si-Fotodiode besteht, die eine erhöhte UV-Lichtempfindlichkeit hat, und mit einem optischen Filter, das ausschließlich für die o.g. UV-Lichtwellenlängen durchlässig ist. Das Filter ist zwischen der Bearbeitungsstelle und dem Detektor angeordnet. Das aufgenommene UV-Lichtsignal wird vom Detektor in ein elektrisches Signal umgewandelt, das von einer Auswerteeinheit verarbeitet wird. Mit einer solchen Vorrichtung ist es möglich, Änderungen der o.g. Parameter des Lasermaterialberarbeitungsprozesses während der Bearbeitung zu erkennen und sie als mögliche Bearbeitungsfehler anzumelden.

Dieses bekannte Verfahren hat den Nachteil, daß es nicht möglich ist, einen Bearbeitungsfehler zu erkennen und anzumelden, sobald während eines Laserschweißprozesses zwei Parameter sich gleichzeitig geändert haben, die entgegengesetzte Auswirkungen auf das Schweißplasma und damit auch auf das aufgenommene UV-Signal haben. Außerdem meldet eine solche Vorrichtung bei einer hohen eingestellten Empfindlichkeit eine zu große Anzahl von Fehlern an, die zwar auf eine Laserschweißprozeß-ParameterStörung zurückzuführen sind, aber zu keinen Schweißnahtfehlern geführt haben.

Als stand der Technik wurde auch die Verwendung einer Fotodiode zur Erfassung von entstehenden Metallspritzern bei einem Einstechvorgang zwecks dessen Überwachung berücksichtigt JP-DS "Pat. abstr. of Japan", 1987, Vol.11/No. 166, M-593, Kokai No.: 61-296980.

Die DE-U-8 710 866 beschreibt ein Verfahren zum Oberflächenhärten eines Werkstücks mit Hilfe eines Laserstrahls. Dort wird die wärmestrahlung des Werkstücks mit Hilfe eines Strahlungsdetektors gemessen, der in einem Regelkreis die Leistung des Lasers auf einem vorgegebenen Sollwert hält. Dieses bekannte Verfahren kann auch zum Schneiden oder Schweißen von Werkstoffen eingesetzt werden.

Der Erfindung liegt die Aufgabe zugrunde, ein Verfahren der eingangs genannten Art vorzuschlagen, mit deren Hilfe eine Qualitätskontrolle der mit dem Laser hergestellten Schweißnaht während des Schweißvorganges selbst durchgeführt wird, unabhängig davon, welche Änderung eines oder mehrerer Bearbeitungsparameter zu einem Schweißfehler geführt haben.

Zur Lösung dieser Aufgabe wird vorgeschlagen, das erfindungsgemäße Verfahren nach dem Hauptanspruch auszubilden.

Dies hat den Vorteil, daß die Menge des aus dem Bearbeitungsherd in Folge der Energiezuführung und des dadurch im "Dampfkanal" entstandenen Dampfdruckes herausgeschleuderten, flüssigen Materials zur Ermittlung der Größe der im Werkstück enstandenen Hohlräume opto-elektonisch in einem Wellenlängenbereich von 800 nm bis vorzugsweise 1300 nm durch wenigstens eine Fotodiode erfaßt, in ein elektrisches Signal umgesetzt und einer Auswerteeinrichtung zugeführt wird.

Der wesentliche Vorteil der Erfindung besteht darin, daß eine eindeutige Erkennung von tasächlichen Schweißfehlern möglich ist. Die Eindeutigkeit des erfindungsgemäßen Verfahrens beruht darauf, daß die Größe der aus dem Schweißherd herausgeschleuderten Tropfen der Größe der in der Schweißnaht zurückgelassenen Poren und Löchern entspricht.

Weitere Vorteile der Erfindung bestehen darin, daß außer Poren auch Löcher während des Laserstrahlschweißens als bevorzugter Bearbeitungsprozeß erkannt und signalisiert werden. Das führt dazu, daß nach dem erfindungsgemäßen Verfahren auch gasdichte Schweißnähte hergestellt werden können. Daraus ergeben sich in Verbindung mit der o.g. Positionserfassung des Werkstückes die Vorteile, daß die Herstellung von Schweißnähten mit dem Laserstrahl ohne Aufsicht während einer personallosen Nachtschicht bei einer 100%-igen Dokumentation der Produktion erfolgen kann. Die Sicherung der hergestellten Qualität führt zu einem höheren Automatisierungsgrad, zu einem schnelleren, fehlerfreien Materialfluß, d.h. zu einer erheblich gesteigerten Produktivität einer Laserschweißanlage.

Nach dem heutigen Stand der Technik ist das Finden von in der Schweißnaht tiefliegenden Poren nur nach dem durchgeführten Schweißprozeß mit Hilfe beispielsweise einer sehr teueren Röntgenkamera oder mit einem Ultraschallmikroskop möglich.

Die Erfindung erhöht außerdem die Wirtschaftlichkeit der Lasermaterialbearbeitung, vorzugsweise beim Laserschweißen und/oder -schneiden, dadurch, daß die hohe Kontrollqualität des erfindungsgemäßen Verfahrens den hohen materiellen und zeitlichen Aufwand einer nachträglichen Prüfung überflüssig macht.

Die Größe der herausgeschleuderten Tropfen entspricht dem Integral des über den erfindungsgemäßen Detektor gewonnenen Signals über einen festgelegten Zeitraum. Dadurch ist es möglich, die Festigkeit einer hergestellten Schweißnaht und/oder das Ausmaß einer einzigen Tropfen-Eruption während der Materialbearbeitung zu beurteilen. Die Netzfrequenz-Synchronisierung der Signalbearbeitung hat den Vorteil, daß dadurch netzfrequenzabhängige Signalstörungen unterdrückt werden. Dies führt dazu, daß die Signalverarbeitung mit gleichbleibend guter Qualität ohne Abgleich an Versorgungsnetzen mit vorzugsweise 50 Hz oder 60 Hz arbeitet.

Auf das schneiden mit dem Laserstrahl lassen sich die genannten Überlegungen mit dem Unterschied übertragen, daß beim Schneiden sowohl der Bereich oberhalb als auch unterhalb der Bearbeitungsstelle nach dem erfindungsgemäßen Verfahren überwacht wird.

Die beschriebenen Vorteile lassen sich an Laserbearbeitungsanlagen, die vorzugsweise mit CO₂-, aber auch mit gepulsten Festkörper-Hochleistungslasern arbeiten, nachvollziehen.

Weitere Vorteile der Erfindung ergeben sich aus den nachfolgenden Beschreibungen von bevorzugten Ausführungsbeispielen.

Die Erfindung wird im folgenden anhand von Ausführungsbeispielen näher erläutert. Es zeigt:
- Fig. 1 - 8: schematisch die Qualitätssicherung nach dem erfindungsgemäßen Verfahren in einer bevorzugten Anordnung beim Laserstrahlschweißen von Metallen;
- Fig. 2 - 8:: schematisch bevorzugte Ausführungformen des erfindungsgemäßen Verfahrens.

Eine grobe Betrachtung der möglichen Schweißfehler führt zu deren Einteilung in zwei Gruppen:
1. Schweißfehler, die während der Laserbearbeitung durch zu hohe Verdampfungsraten des zu bearbeitenden Materials oder durch Verunreinigungen verursacht werden (dabei entstehen Löcher, Poren u.ä.),
2. Schweißfehler, wie Risse, die in einer mit dem Laser hergestellten Schweißnaht nach der Bearbeitung während der Materialabkühlung entstehen.

Die beanspruchte Erfindung macht eine zuverlässige on-line Erkennung von Schweißfehlern der o.g. Gruppe 1 möglich.

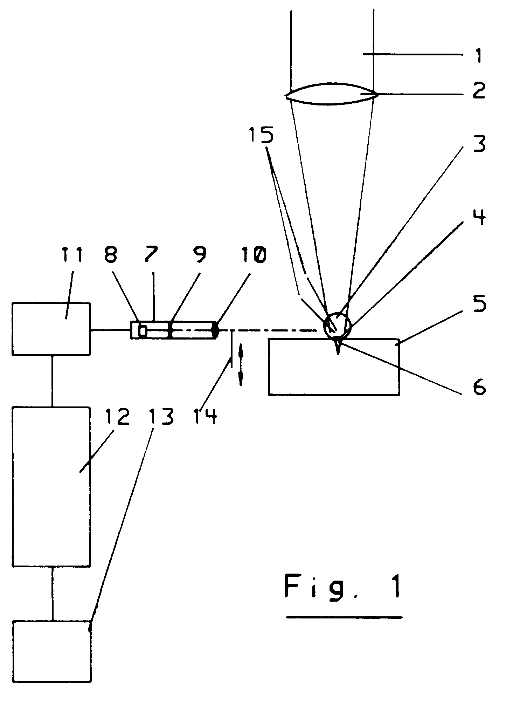

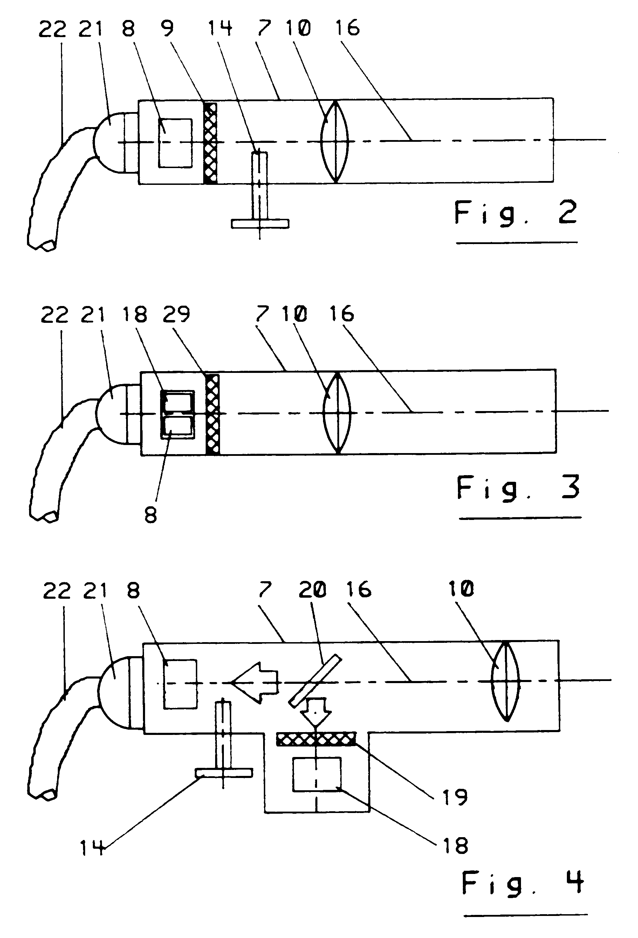

Bei der Energiezuführung über den Laserstrahl 1 mit Hilfe einer vorzugsweise eingesetzten Fokussierlinse 2 in das Werkstück 5 entsteht in der Bearbeitungsstelle 4 einerseits ins Werkstückinnere ein "Dampfkanal" 6 aus dem sporadisch flüssiges Material in Form von "Material-Spritzern" 15 herausgeschleudert wird, andererseits entsteht oberhalb des "Dampfkanals" eine Plasmawolke 3. Der Schweißprozeß ist auf eine Fotodiode 8 über eine Abbildungslinse 10 durch einen optischen Bandpaßfilter 9 vorzugsweise vom Typ Farbglas UG 11 abgebildet. Die optischen Komponenten sind in ein zylinderförmigen Detektorkopf 7 eingebaut, der das Umgebungslicht von der Fotodiode 8 fernhält. Die als Stellschraube ausgebildete Blende 14 ist in den Detektorkopf exzentrisch eingebaut worden (vgl. Fig. 1 und 2). Das Signal der Fotodiode 8 wird mit dem Vorverstärker 11 auf einen Pegel gebracht, der eine Signalauswertung mit der Auswerteschaltung 12 möglich macht. Ein in der Auswertung erkannter Schweißfehler ist für Weiterverarbeitungszwecke über eine Interfacebaugruppe 13 ausnutzbar (vorzugsweise zum Aussortieren von fehlerhaft geschweißten Teilen). Die optische Achse des Detektorkopfes 16 ist auf den Raum unmittelbar oberhalb der Bearbeitungsstelle 4 gerichtet. Mit Hilfe der verschiebbaren Blende 14 wird verhindert, daß der Schweißherd auf die Fotodiode 8 abgebildet wird. Details des Detektorkopfes sind in Fig. 2 dargestellt. Eine solche Vorrichtung besteht aus einer lichtempfindlichen Fotodiode 8, vorzugsweise eine Si-Fotodiode und einem optischen Filter 9, der ausschließlich für die o.g. Nah-IR-Lichtwellenlängen durchlässig ist. Der Filter 9 ist zwischen der Bearbeitungsstelle 4 und der Fotodiode 8 räumlich angeordnet. Das aufgenommene Lichtsignal ist von der Fotodiode 8 in ein elektrisches Signal umgewandelt, das von einer Auswerteeinrichtung 11 + 12 verarbeitet wird. Der elektrische Anschluß an die Fotodiode 8 erfolgt über einen Stecker 21 und ein Anschlußkabel 22. Der Vorverstärker 11 ist vorzugsweise im Detektorkopfgehäuse montiert. In Fig.3 ist eine bevorzugte Ausführung einer UR-IR- kombinierten Ausführung der Vorrichtung dargestellt.

Die Fotodiode 8 ist eine Si-Fotodiode, die sowohl im Nah-IR als auch im Nah-UV eine gute Empfindlichkeit aufweist. Der Filter 29 ist ein Farbglas vom Typ UG 3, das beide o.g. Wellenbereiche durchläßt.

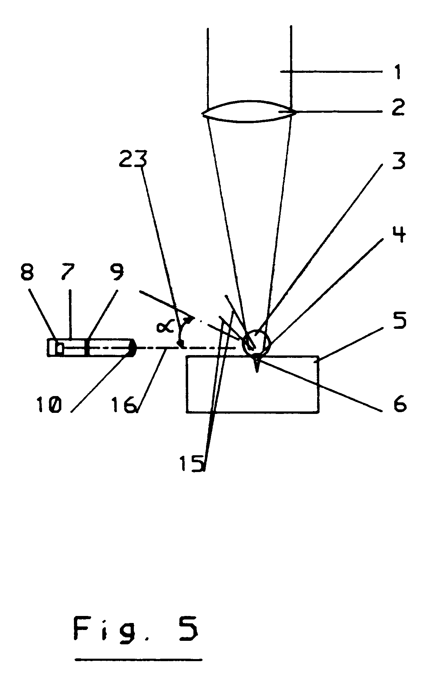

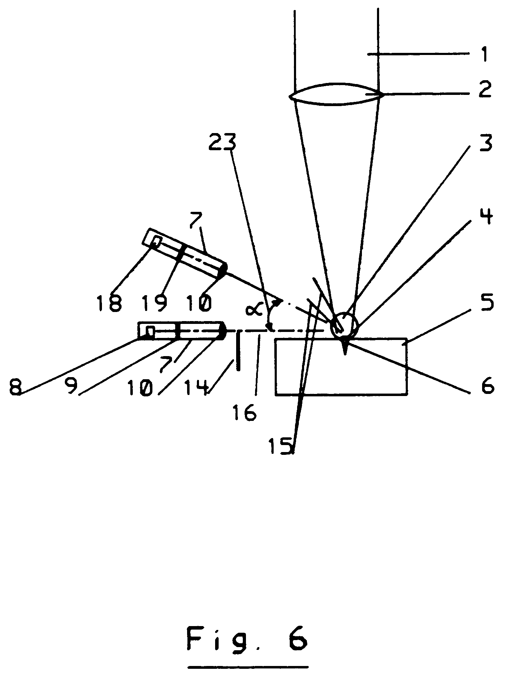

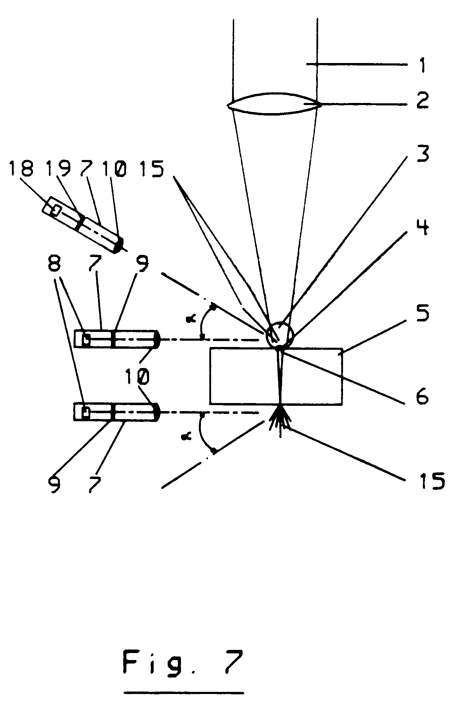

Die Vorrichtung in Fig. 4 kombiniert die Vorrichtung mit einem UV-Detektor. Durch die räumliche Trennung der beiden Fotodioden 8 (IR) und 18 (UV), durch den Einsatz eines 45°-Violettspiegels 20 in einem gemeinsamen Detektorkopf (7) sowie durch den Einsatz der verschiebbaren Blende 14 sind sämtliche vorteilhafte Eigenschaften der Vorrichtungen vereint. In diesem Fall kann auf den Farbfilter vor der Fotodiode 8 verzichtet werden, da der Spiegel 20 und die Si-Fotodiode 8 zusammen ein Bandpaßverhalten aufweisen. In Fig.5 ist eine bevorzugte Schweißanordnung dargestellt. Für Detektorköpfe kann der Winkel 23 der optischen Achse 16 des Detektorkopfes 7 zur Horizontalen einen Wert zwischen 0° und bevorzugt 30° haben. Für Detektorköpfe muß der Winkel 23 den Wert 0° haben (vgl. Fig. 5). In Fig. 6 ist eine andere bevorzugte Schweißanordnung dargestellt. Der UV-Detektorkopf (18) ist ähnlich mit dem Nah-IR-Detektorkopf (8) aufgebaut, enthält jedoch unterschiedliche optische Komponenten (Fotodiode 18, Farb- oder Interferenzfilter 19). In Fig. 7 ist eine bevorzugte Schneideanordnung dargestellt. Die Detektorköpfe werden bevorzugt in gleicher Ausführung oben und unter eingesetzt. In dieser Schneidanordnung kommt der obere Detektor zur Überwachung des Einstechvorganges und der untere zur Überwachung des Schneidprozesses zum Einsatz.

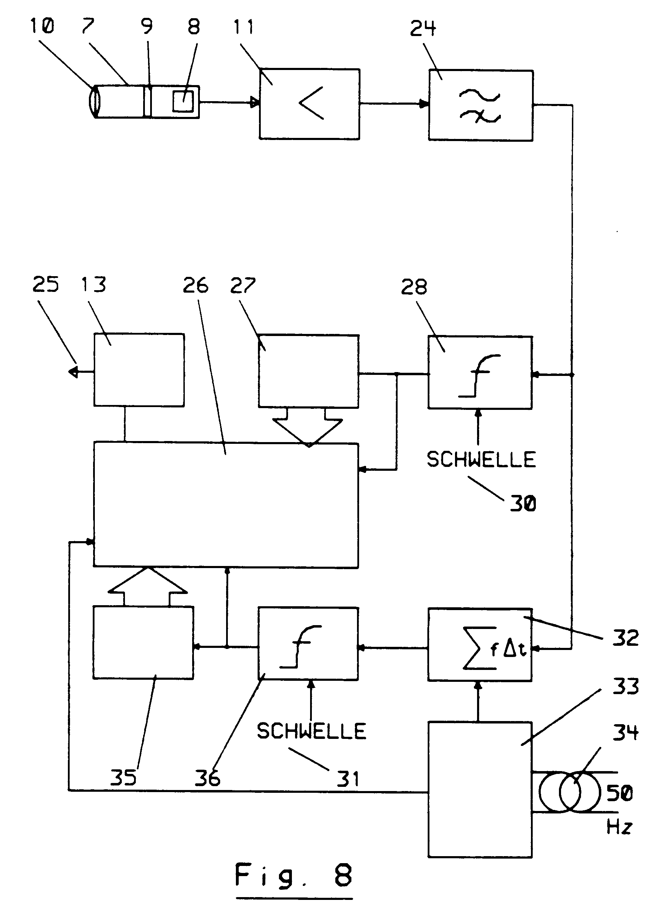

Die Auswertung der Nah-IR-Signale erfolgt in einer bevorzugten Ausführung wie schematisch in Fig. 8 dargestellt. Der Detektorkopf 7 nach Anspruch 2 liefert das Signal einem Vorverstärker 11. Das verstärkte Signal durchläuft ein Hochpaßfilter 24, der den Umgebungslichtpegel unterdrückt. Ein erster Schwellwertschalter 28 vergleicht das Ausgangssignal des Hochpasses 24 mit einer Schwelle 30, wodurch einzelne starke "Eruptionen" 15 aus dem Dampfkanal 6 ausgewertet werden. Die Dauer von "Einzeleruptionen" ist ein Maß für die einzelnen größeren Löcher aus der Schweißnaht. Die Dauer einer solchen "Eruption" ist mit 27 (Stoppuhr) gemessen, und die gewonnene Information wird zwecks Fehlerentscheidung in 26 zusammengetragen. Die Festigkeit der hergestellten Schweißnaht wird dadurch überprüft, daß das Signal aus 24 einem Integrator 32 zugeführt wird. Der Integrator ist netzsnychron über 33 und Trafo 34 gesteuert. Das Ausgangssignal des Integrators 32 ist einem zweiten Schwellwertschalter 28 zugeführt. Eine Überschreitung der Schwelle 31 bedeutet einen Festigkeitsverlust in der Schweißnaht. Die Dauer der Störung ist mit 35 (ähnlich wie 27) gemessen und mit 26 weiterverarbeitet. Das Fehlersignal gelangt anschließend über die Interfaceschaltung 13 zum Schaltungsausgang 25.

### Bezugszeichenliste

- 1: Laserstrahl,
- 2: Fokussierlinse des Laserstrahls,
- 3: Plasmawolke,
- 4: Bearbeitungsstelle (Schweißherd),
- 5: Werkstück,
- 6: Dampfkanal,
- 7: Detektorkopf,
- 8: IR-Fotodiode,
- 9: optisches Bandßaßfilter 800-1300 nm,
- 10: Abbildungslinse im Detektorkopf
- 11: Vorverstärker IR-Signal,
- 12: Auswerteschaltung IR-Signal,
- 13: Interfacebaugruppe zur Weiterverarbeitung,
- 14: verschiebbare Blende,
- 15: Metallspritzer,
- 16: optische Achse eines Detektorkopfes,
- 17: entfällt,
- 18: UV-Fotodiode,
- 19: Farb- oder Interferenzfilter (UV-durchlässig),
- 20: 45°-Violettspiegel,
- 21: Detektorkopfstecker,
- 22: Detektorkopfanschlußkabel,
- 23: Winkel alpha der otpischen Achse der Detektorköpfe mit der Horizontalen,
- 24: Hochpaßfilterschaltung für die IR-Signale,
- 25: Ausgang der Auswerteschaltung,
- 26: Fehlerentscheidungsschaltung,
- 27: Stopp-Uhr-Schaltung,
- 28: Komparatorschaltung,
- 29: Farbglasfilter vom Typ UG3,
- 30: Schaltschwelle des Komparators (28),
- 31: Schaltschwelle des Komparators (36),
- 32: Integratorschaltung des vorverarbeitenden IR-Signals,
- 33: Netzsynchronisierschaltung,
- 34: Netztransformator,
- 35: Stopp-Uhr-Schaltung,
- 36: Komparatorschaltung.

## Patentansprüche

1. Verfahren zur Qualitätssicherung beim Laserstrahlschweißen oder Laserschneiden, wobei das bei der Materialbearbeitung aus einer Plasmawolke (3) entsendete Ultraviolettlicht in einem Wellenlängenbereich von ca. 200 nm bis ca. 450 nm zwecks einer Überprüfung der Laserstrahleinkopplung sowie zur Einhaltung anderer Prozeßparameter, wie Laserausgangsleistung, Strahldefokussierung, Strahlqualität, Schutzgas- und Arbeitsgaszuführung sowie werkstückzusammensetzung, Reinigungsgrad der Werkstückoberfläche und Schweißspaltbreite, mit einer UV-empfindlichen Fotodiode (18) erfaßt wird, deren Ausgangssignal ausgewertet wird,
**dadurch gekennzeichnet**,
daß die Menge des aus dem Bearbeitungsherd (4) infolge der Energiezuführung und des dadurch im Dampfkanal (6) entstandenen Dampfdrucks herausgeschleuderten, flüssigen Materials zur Ermittlung der Größe der im Werkstück (5) entstandenen Hohlräume opto-elektronisch in einem Wellenlängenbereich von 800 nm bis vorzugsweise 1300 nm durch wenigstens eine zusätzliche IR-Fotodiode (8) erfaßt, in ein elektrisches Signal umgesetzt und einer Auswerteeinheit (11, 12) zugeführt wird.

2. Verfahren nach Anspruch 1
**dadurch gekennzeichnet,**
daß die Auswertung der elektrischen Signale der zusätzlichen Nah-IR-Fotodiode (18) durch deren Integration in einem Zeitraum erfolgt, der ein Mehrfaches der verwendeten Netzfrequenzperiode ist.

3. Verfahren nach Anspruch 2
**dadurch gekennzeichnet,**
daß die integrierten Signale einem Schwellwertschalter (28) zugeführt werden.

## Claims

1. A method for quality assurance when welding or cutting a workpiece with laser energy in a material processing operation which produces a plasma cloud (3) during material processing operation, comprising the steps of:
detecting ultraviolet light in said plasma cloud operation, by a detector in a wavelength of approx. 200 nm up to approx 450 nm to control the laser beam coupling in the workpiece and to monitor predetermined limits of process parameters including laser output power, beam defocussing, beam quality, feeding of shielding gas and working gas as well as workpiece structure, claening status of the workpiece surface and welding gap width, by means of a UV photodetection (18) whose output signal is porcessed,
characterized by detecting the quantity of liquid material being thrown out of the welding pool (4) produced during the the material processing operation by the vapor pressure in the hole (6) for detecting the dimensions of the hollows having arisen in the hollows by optical-electronic means in a wave length from 800 nm to preferably 1300 nm by at least one additional IR-photodiode (8) which converts it into an electric signal and supplying it to a processing unit (11,12).

2. The method according to claim 1, wherein the electric signals of the additonal near-IR-photodiode (18) are processed by integrating said signals over a period of time which is a multiple of the used mains period.

3. The method according to claim 2, characterized by supplying the integrated signals to a comparator (28).

## Revendications

1. Procédé destiné à assurer la qualité lors du soudage ou du coupage au rayon laser, la lumière ultraviolette émise par un nuage de plasma (3) lors de l'usinage du matériau étant enregistrée avec une photodiode (18) sensible aux UV dans un domaine de longeurs d'ondes d'environ 200 nm à environ 450 nm dans le but d'un contrôle de la modulation du rayon laser ainsi que du respect d'autres paramètres du process, comme la puissance de sortie du laser, la défocalisation du rayon, la qualité du rayon, l'alimentation en gaz de travail et de protection ainsi que la composition de la pièce à usiner, le degré de propreté de la surface de la pièce et la largeur de la fente de soudure, avec une évaluation du signal de sortie de ladite photodiode,
**caractérisé par le fait**
que la quantité de matériau liquide projetée hors du foyer d'usinage (4) suite à l'apport d'énergie et à la pression de vapeur apparue de ce fait dans l'aire du passage (6) est relevée de manière opto-électronique dans un domaine de longueurs d'ondes de 800 nm à de préférence 1300 nm par au moins une photodiode IR (8) supplémentaire, transformée en un signal électrique et transmise à une unité d'évaluation (11, 12) afin de déterminer la taille des cavités apparues dans la pièce à usiner (5).

2. Procédé selon la revendication 1
**caractérisé par le fait**
que l'évaluation des signaux électriques de la photodiode (18) supplémentaire à IR proximaux a lieu par l'intégration de ces signaux sur une période représentant un multiple de la période de fréquence réseau utilisée.

3. Procédé selon la revendication 2
**caractérisé par le fait**
que les signaux intégrés sont transmis à un interrupteur à seuil (28).
